Europäisches Patentamt

European Patent Office

Office européen des brevets

(11) Numéro de publication: **0 247 952 B1**

# (12) FASCICULE DE BREVET EUROPEEN

(45) Date de publication de fascicule du brevet:
09.10.91

(51) Int. Cl.5: **B65D 63/10**, D02G 3/06,
B65H 57/04, B29C 67/00

(21) Numéro de dépôt: 87420130.4

(22) Date de dépôt: 19.05.87

(54) Procédé de fabrication d'un film plastique pour notamment la solidarisation temporaire de plusieurs produits.

(30) Priorité: 27.05.86 FR 8607908

(43) Date de publication de la demande:
02.12.87 Bulletin 87/49

(45) Mention de la délivrance du brevet:
09.10.91 Bulletin 91/41

(84) Etats contractants désignés:
AT BE CH DE ES GB GR IT LI LU NL SE

(56) Documents cités:
BE-A- 468 871          FR-A- 1 588 091
GB-A- 1 589 255        LU-A- 61 183
US-A- 2 729 055        US-A- 3 546 039

(73) Titulaire: Gennesson, Patrick
1 rue des Fossés
F-42220 Bourg Argental(FR)

(72) Inventeur: Gennesson, Patrick
1 rue des Fossés
F-42220 Bourg Argental(FR)

(74) Mandataire: Dupuis, François
Cabinet Laurent et Charras 3, place de
l'Hôtel-de-Ville
F-42000 Saint-Etienne(FR)

## Description

L'objet de l'invention se rattache au secteur technique des matériaux d'emballage.

Actuellement, pour attacher et maintenir en position des marchandises, objets et produits divers sur des palettes ou autres supports pour le magasinage et les manutentions, plusieurs moyens peuvent être employés.

Par exemple, on peut utiliser des filets en matière plastique qui sont tendus sur les objets à palettiser. Le coût de ces filets est relativement élevé, de plus, ils ne présentent aucune élasticité ce qui implique d'avoir des métrages devant correspondre au volume à emballer. De même, cette absence d'élasticité nuit à la bonne tenue des objets palettisés. Un autre problème apparaît également pour l'enlèvement de ces filets et pour leur stockage temporaire après enlèvement, compte-tenu du volume qu'ils représentent.

On a proposé également des films en matière plastique ayant une capacité d'étirage élastique et d'auto-adhésivité, en étant conditionné essentiellement selon deux modes différents.

Selon un premier mode, le film est enroulé sur un mandrin en formant une bobine de l'ordre de 50 cm de large. Le film est ensuite enroulé manuellement ou automatiquement autour de la palette avec les produits. Un inconvénient apparaît pour les denrées alimentaires qui ne peuvent respirer. Il se produit un phénomène de condensation, ce qui rend pratiquement inapplicable un tel film pour des denrées périssables.

Pour remédier à ces inconvénients, on a proposé d'enrouler le film sur une machine en constituant plusieurs bobines de faible largeur entre les deux lisières et régulièrement espacées pour constituer des intervalles entre chaque bobine. Lors de l'enroulement du film ainsi conditionné et établi autour des objets, subsistent les intervalles qui permettent aux produits de respirer. Cependant, compte-tenu de la diminution importante de la largeur du film, il apparait fréquemment des phénomènes de casse étant donné qu'au fur et à mesure de l'étirement par élasticité du film, il se produit un rétrécissement très important de la laize.

Pour remédier à ces inconvénients, l'invention s'est fixée pour but de transformer, d'une manière simple, efficace, économique et rationnelle, un film plastique du type de ceux ayant une capacité d'étriage élastique et d'auto-adhésivité pour lui conférer une très grande résistance et rigidité à l'arrachement au fur et à mesure de son allongement élastique.

On a proposé des solutions pour augmenter la résistance mécanique des matériaux en bandes ou pour transformer leur section. On peut citer par exemple, les brevets GB 1589255, US 3546039, US 2729055, BE 468871, LU 61183, FR 1588091.

Cependant, les matériaux définis dans ces différents documents antérieurs présentent des caractéristiques qui ne sont pas celles du film plastique utilisé dans la demande spécialement adapté pour atteindre le but recherché qui est le maintien à partir de produits divers sur des palettes par exemple. On rappelle que l'invention vise limitativement un film plastique qui a des caractéristiques, d'une part, d'allongement élastique et, d'autre part, d'auto-adhésivité.

Pour résoudre le problème posé, selon l'invention, on transforme le film plastique ayant une capacité d'étirage élastique et d'auto-adhésivité, de la façon suivante :

- on réalise au moins une laize de largeur réduite,
- on engage la ou les laizes dans un trou de diamètre déterminé pour transformer sa ou leurs sections méplates d'origine, pour la rendre plus étroite tout en augmentant proportionnellement sa ou leurs épaisseurs, de manière à obtenir un film qui a très sensiblement l'aspect d'un cordon, afin d'améliorer la résistance à la traction du film ainsi transformé.

Généralement, le film est conditionné sous forme d'une bobine de grande largeur pour être ensuite découpé longitudinalement afin d'obtenir une série de laizes de largeur réduite.

Dans une première forme de réalisation, on engage chacune des laizes dans un trou correspondant pour obtenir à la sortie un faisceau de cordons susceptibles d'être conditionnés sous forme de bobines indépendantes montées sur un mandrin support.

Dans une autre forme de réalisation, on conditionne les laizes sous forme de bobines indépendantes montées sur un mandrin support, on engage ultérieurement, au moment de l'utilisation, chacune desdites laizes dans un trou correspondant pour obtenir un faisceau de cordons.

Les avantages obtenus grâce à cette invention consistent essentiellement en :
- la facilité de mise en oeuvre,
- la résistance à la traction du cordon obtenu sans porter atteinte à son étirage élastique pour ne pas nuire à la bonne tenue des objets palettisés,
- la possibilité, à partir d'une laize de grande largeur, de conditionner le film après transformation en cordon sous forme de bobines jointives,
- la facilité d'utilisation.

L'invention est exposée ci-après plus en détail à l'aide des dessins qui représentent seulement un mode d'exécution.

La figure 1 est une vue en perspective des marchandises palettisées et maintenues en position au moyen du film selon l'invention,

la figure 2 est une vue en perspective du film avant transformation,

la figure 3 est une vue en perspective du film après tranformation,

la figure 4 est une vue à caractère purement schématique montrant un exemple de moyen de mise en oeuvre pour la transformation du film plastique,

la figure 5 montre un autre exemple pour la transformation du film.

Afin de rendre plus concret l'objet de l'invention, on le décrit maintenant d'une manière non limitative en se référant aux exemples de réalisation des figures des dessins.

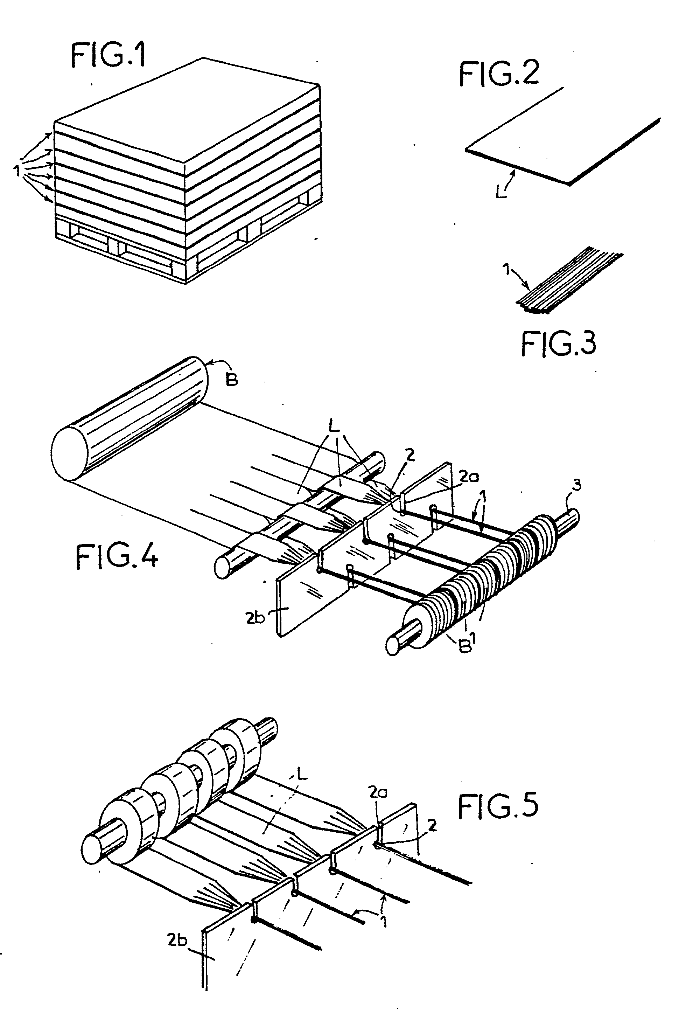

Le film plastique utilisé est du type de ceux ayant une capacité d'étirage élastique d'une part, et d'auto adhésivité, d'autre part. Le film est par exemple en polyéthylène. Selon l'invention, après avoir obtenu au moins une laize de largeur réduite (L) de l'ordre de 5 cm (figure 2), on soumet longitudinalement cette laize (L) à une opération manuelle ou automatique destinée a transformer la section méplate d'origine pour la rendre plus étroite tout en augmentant proportionnellement son épaisseur (figure 3). Le film obtenu (1) a très sensiblement l'aspect d'une corde ou cordon avec capacité d'étirage élastique. Il en résulte une très grande résistance à l'arrachement, le film (1) demeurant quasiment incassable même sous l'effet d'allongement élastique important.

Ce changement de section est réalisé par le passage de la laize (L) dans un trou (2) de diamètre déterminé. Par exemple, ce trou (2) peut être pratiqué coaxialement à une fente (2a) établie dans un support (2b), la fente (2a) facilitant l'engagement initial de la laize.

Pour une application industrielle, il est avantageux d'avoir plusieurs fils (1) disposés en parallèle avec un espace de séparation.

Différents modes d'exécution peuvent être prévus comme montré figures 4 et 5.

Au départ, le film plastique est conditionné sous forme d'une bobine (B) de grande largeur pour être ensuite découpé longitudinalement au fur et à mesure de son avance, par tout moyen connu et approprié, afin d'obtenir une série de laizes (L) de largeur réduite.

A la figure 4, chacune des laizes obtenues (L) est engagée dans les trous correspondants (2) formés sur le support pour obtenir à la sortie un faisceau de cordons (1). Ces cordons (1) peuvent ensuite être conditionnés sous forme de bobines indépendantes (B1) sur un même mandrin support (3). D'une manière avantageuse, les bobines (B1) peuvent être jointives, les cor-dons étant enroulés en spires jointives, ils sont automatiquement espacés au fur et à mesure du dérouleemnt de chaque bobine (B1).

A la figure 5, les laizes obtenues (L), sont préalablement conditionnées sous forme de bobines indépendantes sur un même mandrin puis déroulées et engagées ultérieurement, chacune dans le trou correspondant (2) du support (2b) pour obtenir comme précédemment, un faisceau de cordons (1) prêts à être utilisés directement.

Le faisceau de cordons ainsi obtenu est ensuite enroulé manuellement ou automatiquement en tension autour des objets palettisés (figure 1). Les différents cordons peuvent être réunis pour assurer le liage final.

On prévoit dans une réalisation en variante, d'entrelacer les cordons obtenus afin de réaliser un filet avec capacité d'étirage élastique aussi bien dans le sens longitudinal que transversal.

## Revendications

1. Procédé de transformation d'un film plastique ayant une capacité d'étirage élastique et d'auto-adhésivité pour la solidarisation temporaire de plusieurs produits, selon lequel :

   - on réalise au moins une laize de largeur réduite,
   - on engage la ou les laizes dans un trou (2) de diamètre déterminé pour transformer sa ou leurs sections méplates d'origine, pour la rendre plus étroite tout en augmentant proportionnellement sa ou leurs épaisseurs, de manière à obtenir un film qui a très sensiblement l'aspect d'un cordon (1), afin d'améliorer la résistance à la traction du film ainsi transformé.

2. Procédé selon la revendication 1, selon lequel le film est conditionné sous forme d'une bobine (B) de grande largeur pour être ensuite découpé longitudinalement afin d'obtenir une série de laizes de largeur réduite, caractérisé en ce que l'on engage chacune des laizes (L) dans un trou correspondant (2) pour obtenir à la sortie un faisceau de cordons (1) susceptibles d'être conditionnés sous forme de bobines indépendantes montées sur un mandrin support.

3. Procédé selon la revendication 2, selon lequel le film est conditionné sous forme d'une bobine (B) de grande largeur pour être ensuite découpé longitudinalement afin d'obtenir une série de laizes de largeur réduite, caractérisé en ce que l'on conditionne les laizes sous forme de bobines indépendantes montées sur un mandrin support, on engage ultérieurement, au moment de l'utilisation, chacune desdites laizes dans un trou correspondant pour obtenir un faisceau de cordons (1).

4. Procédé selon la revendication 1, caractérisé en ce qu'en variante, on entrelace les cordons afin d'obtenir un filet avec capacité d'étirage élastique dans le sens longitudinal et transversal.

## Claims

1. Method for transforming a film of plastics having an elastic stretching and self-adhesiveness capacity for the temporary binding together of a plurality of products, in accordance with which :

   - there is produced at least a piece width of a reduced width,
   - the piece width or piece widths is or are engaged within a hole (2) having a predetermined diameter, in order to transform the original flattened sections of the piece width or widths so as to make the width narrower while increasing proportionally the thickness or thicknesses of the piece or pieces, and to obtain a film which has very nearly the aspect of a cord (1), in order to improve the tensile strength of the film having been thus transformed.

2. Method as claimed in Claim 1, in accordance with which the film is processed in the form of a coil (B) having a substantial length, to be thereafter severed longitudinally in order to obtain a series of piece widths of a reduced width, said method being characterized in that each one of the piece widths (L) is engaged within a corresponding hole (2) in order to obtain at the outlet a bundle of cords (1) which could be processed in the form of independent coils mounted on a supporting mandrel.

3. Method as claimed in Claim 2, in accordance with which the film is processed in the form of a coil (B) having a substantial length, to be thereafter severed longitudinally in order to obtain a series of piece widths of a reduced width, said method being characterized in that the piece widths are processed in the form of independent coils mounted on a supporting mandrel, each one of the piece widths being engaged thereafter, at the time of being used, within a corresponding hole in order to obtain a bundle of cords (1).

4. Method as claimed in Claim 1, characterized in that as an alternative form of embodiment, the cords are intertwined in order to obtain a netting with an elastic stretching capacity in the longitudinal and transverse directions.

## Patentansprüche

1. Verfahren zur Verarbeitung eines Kunststoffilms, der für das vorübergehende Festmachen mehrerer Produkte elastische Streckbarkeits- und Selbstklebenmöglichkeiten aufweist, wobei das genannte Verfahren die folgenden Arbeitsvorgänge erfasst :

   - es wird am wenigstens eine warenbreite geringerer Breite zustandegebracht
   - die Warenbreite oder die Warenbreiten wird oder werden in eine Bohrung (2) mit vorbestimmten Durchmesser zur Veränderung des oder der anfänglichen, abgeflachten Querschnitts oder Querschnitte dieser Warenbreite oder Warenbreiten eingeführt, um die Warenbreite bei verhältnismässiger Zunahme deren Stärke oder Stärken enger zu machen, damit ein Film erreicht wird, der sehr angenähert das Aussehen einer Litze (1) aufweist, und dabei die Zugfestigkeit des so verarbeiteten Films verbessert wird.

2. Verfahren nach Anspruch 1, gemäss welchem der Film in der Form einer Spule (B) beträchtlicher Breite ausgestaltet wird, um nachher der Länge nach zerschnitten zu werden, damit eine Reihe von Warenbreiten verminderter Breite erreicht wird, wobei das Verfahren dadurch gekennzeichnet ist, dass jede eine der Warenbreiten (L) in eine geeignete Bohrung (2) eingeführt wird, um an dem Austritt ein Bündel von Litzen (1) zu bilden, die in der Form unabhängiger, auf einem Tragdorn angeordneter Spulen ausgestaltet werden können.

3. Verfahren nach Anspruch 2, nach welchem der Film in der Form einer Spule (B) beträchtlicher Breite ausgestaltet wird, um nachher der Länge nach zerschnitten zu werden, damit eine Reihe von Warenbreiten verminderter Breite erreicht wird, wobei das Verfahren dadurch gekennzeichnet ist, dass die Warenbreiten in der Form unabhängiger, auf einem Tragdorn angeordneter Spulen ausgestaltet sind, wobei jede eine der genannten Warenbreiten nachher zum Zeitpunkt der Verwendung in eine entsprechende Bohrung eingeführt werden, damit ein Bündel von Litzen (1) gebildet wird.

4. Verfahren nach Anspruch 1, dadurch gekennzeichnet, dass die Litzen, in einer abgewandelten Ausführungsform, verflochten werden, damit ein Netz mit elastischer Streckfähigkeit in Längsrichtung und in Querrichtung gebildet wird.

FIG.1

FIG.2

FIG.3

FIG.4

FIG.5